# EUROPÄISCHE PATENTSCHRIFT

(11) **EP 0 684 464 B1**
(45) Veröffentlichungstag und Bekanntmachung des Hinweises auf die Patenterteilung: **16.06.1999**
(21) Anmeldenummer: 95103898.3
(22) Anmeldetag: 16.03.1995
(51) Int. Cl.: G01M 1/32

(54) **Verfahren und Vorrichtung zum Unwuchtausgleich und zur Reinigung an einem Kraftfahrzeugrad**
Procedure and apparatus for imbalance compensation and for cleaning of a vehicle wheel
Procédé et dispositif de compensation et de nettoyage du balourd d'une roue de véhicule

(30) Priorität: 25.05.1994 DE 4418219
(43) Veröffentlichungstag der Anmeldung: 29.11.1995
(73) Patentinhaber: HOFMANN WERKSTATT-TECHNIK GMBH, D-64319 Pfungstadt (DE)
(72) Erfinder: Diez, Ulrich, D-51580 Reichshof (DE)
(74) Vertreter: Nöth, Heinz, Dipl.-Phys.

(56) Entgegenhaltungen:
- EP-A- 0 650 042
- DE-A- 4 229 865
- US-A- 4 106 964

## Beschreibung

Die Erfindung betrifft ein Verfahren nach dem Oberbegriff des Patentanspruches 1 und eine Vorrichtung nach dem Oberbegriff des Patentanspruches 5.

Dieses Verfahren und diese Vorrichtung sind aus der DE 42 29 865 A1 bekannt und weisen eine mit einer Meß- und Auswerteelektronik gekoppelte Tasteinrichtung auf, welche vor oder nach Durchführung des Unwuchtmeßvorganges zur Einspeicherung der entsprechenden, bei der Auswertung der Meßwerte zu berücksichtigenden Scheibenrad-bzw. Felgenabmessungen in die Meßelektronik dient. Ferner wird die Tasteinrichtung ausgenützt, um den Unwuchtausgleichsvorgang, d.h. das positionsgerechte Anordnen des jeweiligen Ausgleichsgewichts am Scheibenrad in der jeweiligen Ausgleichsebene zu erleichtern. Auf diese Weise erreicht man eine höhere Genauigkeit beim Einsetzen, insbesondere von Klebegewichten, in die je nach Felgen- bzw. Scheibenradtyp unterschiedlichen Ausgleichsebenen. Hierbei läßt sich die Genauigkeit vor allem dadurch erhöhen, daß zwischen der vor oder nach dem Unwuchtmeßvorgang durch die Tasteinrichtung abgetasteten Ausgleichsebene und den ebenfalls abgetasteten wirksamen Ausgleichsradius für die Auswertung der Meßwerte (Abtastmodus) und der bei der positionsgerechten Anordnung des jeweiligen Ausgleichsgewichts, insbesondere Klebegewichts, am Scheibenrad aufzufindenden Ausgleichsebene über die in die Meßelektronik eingespeicherte Ausgleichsebenenposition (Wiederauffindemodus) eine exakte Korrelation vorhanden ist, die mit Hilfe der Tasteinrichtung beim Ausgleichsvorgang ausgenützt wird.

Hierbei ist es möglich, das Wiederauffinden der vor oder nach der Durchführung des Unwuchtmeßvorgangs in die Meßelektronik eingespeicherten Ausgleichsebenenposition zu erleichtern. Dies kann dadurch geschehen, daß mit Hilfe der beispielsweise als Taststange oder Tasthebel ausgebildeten Tasteinrichtung die vorher ausgemessene Ausgleichsebene angefahren wird und der jeweilige Abstand der Tastspitze der Taststange bzw. des Tasthebels oder des beim Unwuchtausgleich wirksamen Schwerpunkts des Ausgleichsgewichts von der wieder aufzufindenden Ausgleichsebene durch entsprechende Signale sichtbar oder hörbar gemacht wird. Dabei kann der jeweilige noch vorhandene Abstand zu der wiederaufzufindenden Ausgleichsebene digital oder sonstwie angezeigt werden. Beim Wiederauffinden der gesuchten Ausgleichsebene kann ein optisches oder auch ein akustisches Signal der Bedienungsperson anzeigen, daß mit der Tasteinrichtung die gesuchte bzw. die wiederaufzufindende Ausgleichsebene erreicht ist.

Dabei kann nach Durchführung der Unwuchtmeßläufe und Anzeige der Ergebnisse des Meßlaufs für die Positionierung der Ausgleichsgewichte, insbesondere Klebegewichte, am Scheibenrad bzw. der Felgenschüssel die Tasteinrichtung (Taststange, Tasthebel), die beispielsweise wie in der deutschen Patentanmeldung P 41 22 844.8 beschrieben, ausgebildet ist, aus der Ruhelage gebracht werden, wodurch ein Schalter betätigt wird, welcher die Meß- bzw. Auswerteelektronik der Auswuchtmaschine auf den Betriebsmodus Wiederauffinden der Ausgleichsebenen" (Wiederauffindemodus) schaltet. Die Umschaltung kann dabei durch einen manuell betätigbaren Schalter, z.B. Tastenschalter oder ähnliche Betätigungselemente, erfolgen. Die Umschaltung kann auch automatisch im zeitlichen Verlauf eines Betriebsablaufprogramms oder durch eine Steuerbewegung der Tasteinrichtung erreicht werden.

Sobald die jeweilige Ausgleichsebene durch die Tasteinrichtung bzw. den Schwerpunkt des an der Tasteinrichtung befestigten Gewichts erreicht ist, kann schließlich das Eindrehen des Kraftfahrzeugrades in die Ausgleichswinkellage erfolgen und das Ausgleichsgewicht senkrecht über der Hauptwelle der Auswuchtmaschine angebracht, d.h. eingeschlagen bzw. im Falle von Klebegewichten verklebt werden.

Das Verkleben bereitet allerdings erhebliche Schwierigkeiten. Schon nach kurzer Laufzeit von Aluminium-Scheibenrädern hat sich nämlich an der Innenseite der Felge eine Oberflächenschicht gebildet, die zumeist aus fest gebranntem Bremsabrieb, Staub, Sand, losen Lackschichten, Aluminiumoxyd und von der Fahrbahn aufgewirbelten Bitumenspritzern besteht, die das Verkleben der Ausgleichsgewichte erheblich erschweren, wenn nicht gar unmöglich machen und bei unzureichender Reinigung der Klebeflächen die Ablösung und den Verlust der Klebegewichte bewirken.

Die folglich erforderliche Reinigung geschieht bislang durch großflächige Reinigung der Felge bzw. des Scheibenrades vor dem Aufspannen des Kraftfahrzeugrades auf die Auswuchtmaschine mittels Lösungsmittel oder Dampfstrahl. Als nachteilig erweist es sich dabei, daß die ALuminiumoxydschicht nicht beseitigt wird, daß diese Reinigungsverfahren infolge zusätzlicher Arbeits- und Trocknungsgänge zeitaufwendig sind und zudem die Lösungsmitteldämpfe gesundheitsschädlich sind.

Bekannt ist auch die Abtragung der Verunreinigungen mittels Schmirgeln oder Schaben bei bereits auf die Unwuchtmaschine aufgespanntem Kraftfahrzeugrad. Bei diesem Verfahren ist jedoch die Erkennung der exakten Klebestelle ungenau, zudem sind sie aufgrund der Arbeitsposition qualitativ unbefriedigend und zeitaufwendig, da die Reinigung erheblich großflächiger durchgeführt werden muß, als dies die Ausgleichsstelle an sich fordert.

Die Kombination von einzelnen, vorstehend aufgezeigten Schritten führt gleichfalls nicht zu befriedigenden Ergebnissen.

Die vorliegende Erfindung hat sich die Aufgabe gestellt, für das eingangs genannte Verfahren und die eingangs genannte Vorrichtung eine wirkungsvolle Reinigung mit geringem Aufwand zu schaffen.

Zur Lösung dieser Aufgabe sieht die Erfindung beim Verfahren die kennzeichenden Merkmale des Patentanspruches 1 und bei der Vorrichtung die kennzeichnenden Merkmale des Patentanspruches 5 vor.

Dem Unwuchtausgleichsvorgang wird somit ein Reinigungsvorgang vorgeschaltet, bei dem mit Hilfe der Tasteinrichtung und insbesondere an deren freiem Ende ein Reinigungswerkzeug, z.B. eine Bürste oder ein Schleifwerkzeug, in einem Wiederauffindemodus an die Ausgleichsposition herangeführt wird und die Fläche des Scheibenrades in der Ausgleichsposition gereinigt wird.

Zur Beschränkung des Reinigungsvorganges auf die Flächengröße des Ausgleichsgewichtes wird bevorzugt die Längsabmessung des im Unwuchtmeßvorgang ermittelten Ausgleichsgewichtes in die Meß- und Auswerteelektronik abgespeichert und nach Eindrehen des Kraftfahrzeugrades in die Ausgleichswinkellage das Scheibenrad zumindest längs einer der Längsabmessung des Ausgleichsgewichtes proportionalen Bogenlänge in der Ausgleichsebene gereinigt.

Die der Längsabmessung des Ausgleichsgewichtes entsprechende Bogenlänge bzw. der dieser Bogenlänge entsprechende Winkel α, der sich aus Bogenlänge und Ausgleichsradius R_{A} zusammensetzt, kann dabei über die Eindrehanzeige im Display oder auf dem Monitor für den Bedienenden sichtbar angezeigt werden.

Der erfindungsgemäße Reinigungsvorgang hat außer einem guten Reinigungsergebnis und damit sicherer Verklebung des zu befestigenden Ausgleichsgewichts zahlreiche weitere Vorteile. Durch die Möglichkeit, die Reinigungswerkzeuge dem Grad und der Beschaffenheit der Verunreinigung anzupassen, erzielt man eine optimale Schonung der Felge. Zusätzlich ist der Raumbedarf für ansonsten erforderliche Reinigungs- und Dampfstrahlgeräte und auch die Umweltbelastung äußerst gering, da man auch ohne Lösungsmittel arbeiten kann und durch die lokal beschränkte Reinigungsfläche nur wenig Staub auftritt.

Im Vergleich zu üblichen Reinigungsverfahren werden geringer Aufwand, geringer Platzbedarf und damit herabgesetzte Raumkosten sowie große Zeitersparnis und eine geringe Reklamationsrate erreicht. Dies sind letztlich Vorteile, die sich in Bezug auf den Aufwand vorteilhaft niederschlagen.

Mit der Vorrichtung können die Funktionen des Abtastens der Radabmessungen, des Auffindens der Ausgleichsstelle am Rad und damit der Erleichterung des Ausgleichsvorganges und ferner der Reinigung der Ausgleichsstelle vor dem Befestigen des Ausgleichsgewichts erfüllt werden. Es handelt sich somit um eine Abtast-, Ausgleichsstellereinigungs- und Gewichtepositionierungseinrichtung.

In den Figuren ist ein Ausführungsbeispiel für die weitere Erläuterung der Erfindung dargestellt. Es zeigt:
- Fig. 1:: in teils gebrochener und schematischer Darstellung eine Draufsicht auf eine Auswuchtmaschine mit einer Vorrichtung zur Durchführung des Reinigungsvorganges samt Blockschaltbild einer nachgeschalteten Meß- und Auswerteeinrichtung. Die Darstellung der Auswuchtmaschine beschränkt sich lediglich auf die Hauptwelle samt Radaufspannvorrichtung und Abtasteinrichtung. Auf die Veranschaulichung der üblichen hinlänglich bekannten Elemente der Auswuchtmaschine und ihre Meßeinrichtung wurde verzichtet;
- Fig. 2:: eine Draufsicht auf das Scheibenrad gemäß Ausschnitt E nach Fig. 1 in vergrößertem Maßstab und in teil gebrochener und geschnittener Darstellung;
- Fig. 3:: in der Darstellung nach Fig. 2 eine Seitenansicht des Ausschnitts E nach Fig. 1.

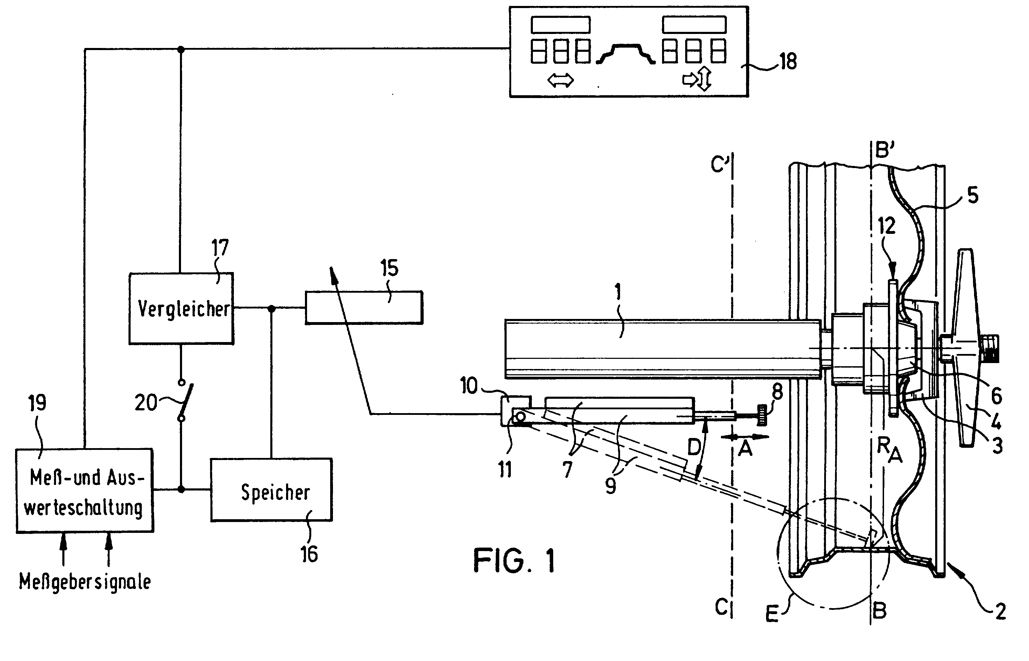

Fig. 1 zeigt eine Hauptwelle 1 einer Auswuchtmaschine mit zugehöriger Radaufspann- und Zentriervorrichtung, bestehend aus drehfest mit der Hauptwelle 1 verbundenem Spannflansch 12, Konus 6 und Abspannelementen 3, 4.

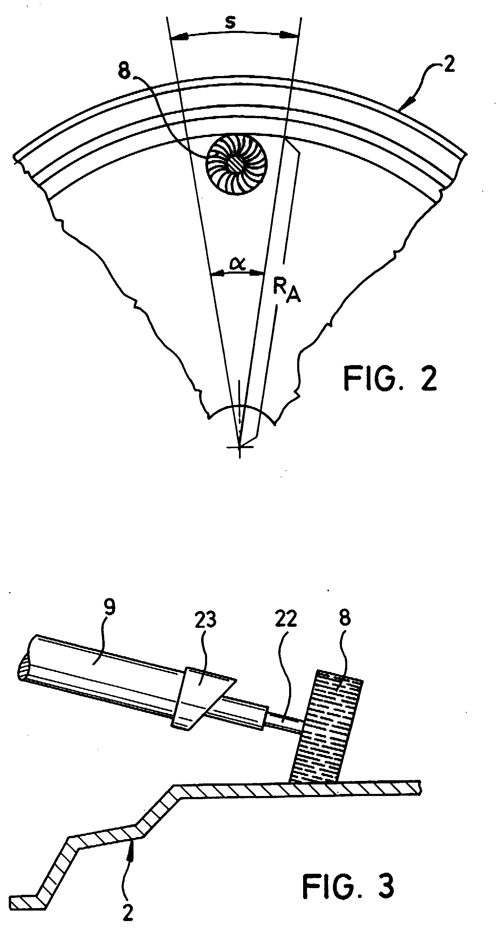

Die Abtasteinrichtung besitzt einen in Abtastausgangsstellung parallel zur Hauptwelle 1 ausgerichteten, ausziehbaren Tasthebel 9 mit in Pfeilrichtung A ausziehbarer Tastspitze, die im gezeigten Ausführungsbeispiel eine anhand von Fig. 3 näher erläuterte Bürste 8 trägt. Der Tasthebel 9 ist mit seinem einen Ende 11 um einen ortsfest zur Hauptwelle 1 angeordneten Drehpunkt, z.B. ein Scharnier, um einen von der Position der Tastspitze abhängigen Winkel, z.B. den Winkel D, in eine strichliniert angedeutete Stellung 9' schwenkbar. Der Schwenkwinkel wird mit Hilfe einer Winkelmeßeinrichtung 10, die ein Drehpotentiometer aufweisen kann, gemessen.

Ein in der Zeichnung nicht dargestellter entsprechend angeordneter Längsschlitz in der lediglich strichliert angedeuteten Gehäusewand C, C' der Auswuchtmaschine kann dabei bewirken, daß der Tasthebel 9 stets nur in einer mit der Längsmittelachse der Hauptwelle 1 gemeinsamen Ebene schwenkbar ist. Der Abstand zwischen dem Tasthebel 9 in Abtast-Ausgangsstellung bzw. Ruhestellung und der Längsmittelachse der Hauptwelle 1 ist darüber so gewählt, daß die Tastspitze und somit das Reinigungswerkzeug 8 auch den kleinsten denkbaren Ausgleichsdurchmesser anfahren kann.

Wie aus Fig. 1 erkennbar ist, ermöglicht die so geschaffene Abtasteinrichtung das mühelose Hinführen des Reinigungswerkzeuges 8 zu beliebigen Stellen des Scheibenrades bzw. Felge 2 und damit z.B. die Erfassung der dargestellten Ausgleichsebene, die B, B' samt Ausgleichsradius Rₐ. Der jeweilige Auszug A der Tastspitze samt Reinigungswerkzeug 8 wird mit einer z.B. ein Linearpotentiometer enthaltenden Meßeinrichtung 7 gemessen.

Zur Erkennung der Ausgleichsposition für das Ausgleichsgewicht sind im gezeigten Ausführungsbeispiel die z.B. ein Linearpotentiometer bzw. Drehpotentiometer enthaltenden Meß- bzw. Winkelmeßeinrichtungen 7 bzw. 10 mit einer Positionserkennungseinrichtung 15 verbunden. Die Positionserkennungseinrichtung 15 erzeugt analoge Positionserkennungssignale, die proportional der jeweiligen Auszugslänge (Doppelpfeil A) und der Schwenklage (Doppelpfeil D) des Tasthebels sind und nach Digitalisierung im Speicher 16 gespeichert werden können.

Beim Reinigungsverfahren nach der Erfindung wird die dargestellte Tasteinrichtung, die gemäß DE 42 29 865 Al beim Abtastmodus zum Abtasten eines Scheibenrades und beim Wiederauffindemodus zur Erleichterung der positionsgerechten Anordnung von Ausgleichsgewichten am Scheibenrad dient, in einem dem Unwuchtausgleichsvorgang vorgeschalteten weiteren Wiederauffindemodus verwendet, um das bevorzugt an der Tastspitze angeordnete Reinigungswerkzeug, z.B. eine Bürste 8, an die zu reinigende Ausgleichsposition heranzuführen.

Hierzu ist an die Positionserkennungseinrichtung 15 ein Speicher 16 angeschlossen, der Bestandteil der Meß- und Auswerteelektronik 19 ist, in der beim Unwuchtmeßvorgang in den Meßläufen erhaltene Meßgebersignale ausgewertet werden. Die ausgewerteten Meßgebersignale werden dann in Form von Größen- und Winkelangaben von einer Anzeigeeinrichtung 18 angezeigt und analog dem Unwuchtausgleichsverfahren nach DE 42 29 865 A1 zum positionsgerechten Heranführen des Reinigungswerkzeuges an die Ausgleichsstelle verwendet.

Sowohl an den Speicher 16 als auch an die Positionserkennungseinrichtung 15 ist ein Vergleicher 17 angeschlossen, der mit der Anzeigeeinrichtung 18 verbunden ist. Die Meß- und Auswerteelektronik 19 und der Speicher 16 sind dabei über einen manuell oder automatisch durch ein Ablaufprogramm oder auch eine bestimmte Steuerbewegung des Tasthebels 1 betätigbaren Schalter 20 mit dem Vergleicher 17 verbunden, bei dessen Betätigung die Betriebsart des Wiederauffindens (Wiederauffindemodus) eingeschaltet und das Reinigungswerkzeug 8 an die Ausgleichsstelle befördert wird.

Das Reinigungswerkzeug 8 wird dabei durch die Tasteinrichtung zunächst in Pfeilrichtung A (s. Figur 1) in die jeweilige Ausgleichsebene, z.B. B, B' befördert, beim anschließenden Eindrehen des Kraftfahrzeugrades in die Ausgleichswinkellage in Rotation versetzt und ausschließlich längs einer der Längsabmessung des Ausgleichsgewichts entsprechenden Bogenlänge "s" gegen das Scheibenrad 2 angedrückt (s. Fig. 2). Dabei kann das Rad entsprechend der Bodenlänge "s" gegenüber dem Reinigungswerkzeug gedreht werden oder das Reinigungswerkzeug wird gegenüber dem Rad entsprechend der Bodenlänge bewegt.

Die Bogenlänge "s" bzw. der bei bestimmten Ausgleichsradius R_{A} dieser Bogenlänge entsprechende Winkel α wird dabei bereits beim Unwuchtmeßvorgang durch die Meß- und Auswerteelektronik 19 errechnet und auf der Anzeigeeinrichtung 18 dargestellt. Die Berechnung der Bogenlänge "s" wird dadurch erleichtert, daß die üblicherweise standardisierten d.h. bevorzugt in je 5 Gramm abgestuften Ausgleichsgewichte jeweils auf standardisierte Größen- und somit Längenabmessungen haben, so daß aus der Größe eines im Unwuchtmeßvorgang ermittelten Ausgleichsgewichts auf die zu reinigende Klebefläche geschlossen werden darf. Auch bei stufenlos von einem Band mit bestimmter Breite abtrennbaren Ausgleichsgewichten kann die Längenbestimmung und Speicherung durchgeführt werden.

Wie die Figur 3 zeigt, ist im Bereich der Tastspitze des Tasthebels 1 eine in der Zeichnung nicht dargestellte Spindel 22 angeordnet, die über einen Antrieb in Rotation versetzbar ist. Im Bereich ihres freien Endes trägt diese Spindel eine gleichfalls nur angedeutete Schnellwechselaufnahme 23 üblicher Art für Werkzeuge, durch die ein rascher Einsatz des Reinigungswerkzeuges, z.B. einer Bürste 8 oder eines Schleifwerkzeuges möglich ist.

## Patentansprüche

1. Verfahren zum Unwuchtausgleich an einem Kraftfahrzeugrad (2) mit Hilfe von einem oder mehreren Ausgleichsgewichten, insbesondere Klebegewichten, die in bestimmten, durch eine Meß- und Auswerteelektronik (19) während eines Unwuchtmeßvorganges ermittelten Positionen am Scheibenrad eines Kraftfahrzeugrades (2) befestigt werden, wobei beim Unwuchtausgleichsvorgang zur positionsgerechten Anordnung des jeweiligen Ausgleichsgewichts am Scheibenrad (2) eine mit der Meßelektronik (19) gekoppelte Tasteinrichtung (1) verwendet wird, mit welcher zur Auswertung der beim Unwuchtmeßvorgang erhaltenen Meßwerte eine oder mehrere Scheibenradabmessungen für eine Einspeicherung in die Meß- bzw. Auswerteelektronik (19) getastet wird bzw. werden,
dadurch gekennzeichnet,
daß dem Unwuchtausgleichsvorgang eine Reinigung einer Ausgleichspositionsfläche am Kraftfahrzeugrad (2) mit Hilfe eines Reinigungswerkzeuges (8) vorgeschaltet wird, das mit der Tasteinrichtung (1) in einem Wiederauffindemodus an die Ausgleichsposition herangeführt wird.

2. Verfahren nach Anspruch 1, dadurch gekennzeichnet, daß die Abmessungen des Ausgleichsgewichtes gespeichert werden und nach Eindrehen des Kraftfahrzeugrades (2) in eine Ausgleichswinkellage zumindest eine den Abmessungen des Ausgleichsgewichtes entsprechende Fläche am Scheibenrad gereinigt wird.

3. Verfahren nach Anspruch 1 oder 2, dadurch gekennzeichnet, daß durch den Unwuchtmeßvorgang die Gewichtsgröße des jeweils erforderlichen Ausgleichsgewichtes ermittelt und aus der ermittelten Gewichtsgröße die entsprechende Fläche des Ausgleichsgewichtes gespeichert wird.

4. Verfahren nach einem der Ansprüche 1 bis 3, dadurch gekennzeichnet, daß die Länge des Ausgleichsgewichtes gespeichert wird und in einer Ausgleichsebene (B,B') eine Scheibenradfläche in einer Ausgleichswinkellage in einer entsprechenden Bogenlänge (s) gereinigt wird.

5. Vorrichtung zum Unwuchtausgleich an einem Kraftfahrzeugrad (2) mit einer Tasteinrichtung (1), welche mit einer Meß- und Auswerteelektronik (19) gekoppelt ist, zur Durchführung eines Verfahrens nach einem der Ansprüche 1 bis 4,
dadurch gekennzeichnet,
daß im Bereich einer Tastspitze der Tasteinrichtung (1) ein Reinigungswerkzeug (8) in einer Befestigungseinrichtung (23) angeordnet ist.

6. Vorrichtung nach Anspruch 5, dadurch gekennzeichnet, daß die Breite des Reinigungswerkzeugs (8) gleich der Breite des Ausgleichsgewichtes gewählt ist.

7. Vorrichtung nach Anspruch 5 oder 6, dadurch gekennzeichnet, daß das Reinigungswerkzeug (8) einen Rotor mit Reinigungsfunktion aufweist.

8. Vorrichtung nach einem der Ansprüche 5 bis 7, dadurch gekennzeichnet, daß das Reinigungswerkzeug (8) in die Tastspitze der Tasteinrichtung (1) eingesetzt ist.

## Claims

1. A method of unbalance compensation on a motor vehicle wheel (2) by means of one or more balancing weights, in particular adhesive weights which are fixed to the disc wheel portion of a motor vehicle wheel (2) in given positions which are ascertained by an electronic measuring and evaluation arrangement (19) during an unbalance measuring operation, wherein in the balancing operation for arranging the respective balancing weight at the correct position on the disc wheel portion (2) use is made of a sensing device (1) which is coupled to the electronic measuring arrangement (19) and with which one or more disc wheel portion dimensions is or are sensed for storage in the electronic measuring and evaluation arrangement (19), for evaluation of the measurement values obtained in the unbalance measuring operation,
characterised in that
the balancing operation is preceded by an operation of cleaning a balancing position surface on the motor vehicle wheel (2) by means of a cleaning tool (8) which is moved to the balancing position with the sensing device (1) in a retrieval mode.

2. A method according to claim 1 characterised in that the dimensions of the balancing weight are stored and after the motor vehicle wheel (2) is turned into an angular balancing position at least one surface on the disc wheel portion which corresponds to the dimensions of the balancing weight is cleaned.

3. A method according to claim 1 or claim 2 characterised in that the size of the respectively required balancing weight is ascertained by the unbalance measuring operation and the corresponding surface area of the balancing weight is stored from the ascertained size of the weight.

4. A method according to one of claims 1 to 3 characterised in that the length of the balancing weight is stored and a disc wheel portion surface is cleaned in a balancing plane (B, B') in an angular balancing position in a corresponding arcuate length (s).

5. Apparatus for unbalance compensation on a motor vehicle wheel (2) having a sensing device (1) which is coupled to an electronic measuring and evaluation arrangement (19), for carrying out a method according to one of claims 1 to 4,
characterised in that
a cleaning tool (8) is arranged in a fixing device (23) in the region of a sensing tip of the sensing device (1).

6. Apparatus according to claim 5 characterised in that the width of the cleaning tool (8) is selected to be equal to the width of the balancing weight.

7. Apparatus according to claim 5 or claim 6 characterised in that the cleaning tool (8) has a rotor with a cleaning function.

8. Apparatus according to one of claims 5 to 7 characterised in that the cleaning tool (8) is fitted into the sensing tip of the sensing device (1).

## Revendications

1. Procédé pour la compensation de balourd sur une roue de véhicule automobile (2) à l'aide d'un ou plusieurs poids d'équilibrage, notamment de poids adhésifs, qu'on fixe sur la roue pleine (2) d'un véhicule automobile en certaines positions déterminées par une électronique de mesure et d'évaluation (19) pendant une opération de mesure de balourd, dans lequel on utilise lors de l'opération de compensation de balourd, pour le positionnement correct du poids d'équilibrage respectif sur la roue pleine (2), un dispositif palpeur (1) qui est couplé à l'électronique de mesure (19) et avec lequel, pour l'évaluation des valeurs mesurées obtenues lors de l'opération de mesure de balourd, on analyse une ou plusieurs dimensions de roue pleine en vue d'une mémorisation dans l'électronique de mesure et d'évaluation (19), caractérisé par le fait qu'on fait précéder l'opération de compensation de balourd d'un nettoyage d'une surface de position d'équilibrage sur la roue (2) du véhicule automobile à l'aide d'un outil de nettoyage (8) qui, en un mode servant à retrouver la bonne position, est approché de la position d'équilibrage par le dispositif palpeur (1).

2. Procédé selon la revendication 1, caractérisé par le fait qu'on mémorise les dimensions du poids d'équilibrage et, après vissage de la roue (2) du véhicule automobile à une position angulaire d'équilibrage, on nettoie sur la roue pleine au moins une surface correspondant aux dimensions du poids d'équilibrage.

3. Procédé selon la revendication 1 ou 2, caractérisé par le fait qu'on détermine par l'opération de mesure de balourd la taille du poids d'équilibrage respectivement nécessaire et on mémorise à partir de la taille de poids déterminée la surface correspondante du poids d'équilibrage.

4. Procédé selon l'une des revendications 1 à 3, caractérisé par le fait qu'on mémorise la longueur du poids d'équilibrage et on nettoie dans un plan d'équilibrage (B, B') une surface de roue pleine à une position angulaire d'équilibrage sur une longueur d'arc correspondante (s).

5. Dispositif pour la compensation de balourd sur une roue de véhicule automobile (2), comportant un dispositif palpeur (9) qui est couplé à une électronique de mesure et d'évaluation (19), en vue de la mise en oeuvre d'un procédé selon l'une des revendications 1 à 4, caractérisé par le fait qu'un outil de nettoyage (8) est placé dans un dispositif de fixation (23) dans la zone d'une pointe de palpation du dispositif palpeur (9).

6. Dispositif selon la revendication 5, caractérisé par le fait que la largeur de l'outil de nettoyage (8) est choisie égale à la largeur du poids d'équilibrage.

7. Dispositif selon la revendication 5 ou 6, caractérisé par le fait que l'outil de nettoyage (8) comporte un rotor ayant une fonction de nettoyage.

8. Dispositif selon l'une des revendications 5 à 7, caractérisé par le fait que l'outil de nettoyage (8) est placé dans la pointe de palpation du dispositif palpeur (9).
